# EUROPEAN PATENT APPLICATION

(11) **EP 4 818 959 A1**
(43) Date of publication of application: **07.10.2026**
(21) Application number: 24896997.4
(22) Date of filing: 15.08.2024
(51) Int. Cl.: G06F 30/27, G06F 30/32, G06F 30/39, H01L 21/02, G06F 113/18

(54) **DESIGN ASSISTANCE SYSTEM AND INTEGRATION DEVICE**

(30) Priority: 27.11.2023 JP 2023199654
(71) Applicant: Rapidus Corporation, Tokyo 102-0083 (JP)
(72) Inventor: KOYAMA, Akio, Tokyo 102-0083 (JP); KOBAYASHI, Masaharu, Tokyo 102-0083 (JP); KOIKE, Atsuyoshi, Tokyo 102-0083 (JP); YOSHIDA, Mahoro, Tokyo 102-0083 (JP)
(74) Representative: MFG Patentanwälte Meyer-Wildhagen Meggle-Freund Gerhard PartG mbB
(86) International application number: PCT/JP2024/029061
(87) International publication number: WO 2025/115305

(57) **Abstract**

A design assistance system includes: a design unit that designs a wafer process and a packaging process; a wafer process unit that manages the wafer process; a package unit that manages the packaging process for the wafer manufactured by the wafer process unit; and an integration device that acquires wafer process information measured in the wafer process from the wafer process unit, acquires packaging process information measured in the packaging process from the package unit, and provides, to the design unit, design assistance information obtained on the basis of the wafer process information and the packaging process information.

## Description

### Technical Field

The present invention relates to a design assistance system and an integration device.

### Background Art

Conventionally, a general-purpose semiconductor that can be mounted on various products is mass-produced. Examples of the general-purpose semiconductor include a central processing unit (CPU) mounted on a personal computer. A general-purpose semiconductor based on conventional von Neumann architecture has been designed so as to increase performance of sequential processing.

According to Moore's Law, it is considered that production cost can be reduced by increasing the degree of integration of a semiconductor, and conventionally, a main target has been to increase the production number of general-purpose semiconductors and to reduce the production cost. Note that, in order to increase the production number of semiconductors, a large amount of capital investment is required. For this reason, a fabless production method in which a company that mainly designs a semiconductor leaves production of the semiconductor to an external company has been a mainstream.

Patent Literature 1 discloses a technique related to lithography-based pattern optimization.

### Citation List

### Patent Literature

Patent Literature 1: US 11449659 B2

### Summary of Invention

### Technical Problem

With recent development of an artificial intelligence (AI) technique, a semiconductor is used for processing of AI. In the processing of AI, since parallel processing is performed, it is not appropriate to use a general-purpose semiconductor. For this reason, it has been desired to manufacture a dedicated semiconductor optimized for each AI to be used. However, the dedicated semiconductor is a semiconductor that can be used only for a specific product, and cannot be operated even if the dedicated semiconductor is mounted on a product other than the specific product. For this reason, it is not realistic to mass-produce the dedicated semiconductor, and there is a problem that large cost is required even if the dedicated semiconductor can be mass-produced.

Along with progress of miniaturization of a semiconductor, not only a turn around time (TAT) of semiconductor manufacturing but also a period required for design has become longer because rules and constraints of semiconductor design have become complicated. For this reason, when a problem is found in design in semiconductor development, enormous time and cost have been required to redo design and manufacturing (trial production). Therefore, there has been a demand for a method for reducing the number of redesigns of a semiconductor.

In a current semiconductor manufacturing method, a company that designs a semiconductor and a company that manufactures the semiconductor exist separately. For this reason, optimal manufacturing conditions, a cause of failure, and the like that can be found only when a company that manufactures a semiconductor manufactures a semiconductor on the basis of design information from a company that designs a semiconductor are not shared by the company that designs a semiconductor. In addition, even if optimal manufacturing conditions, a cause of failure, and the like are shared by the companies, the company that designs a semiconductor does not find how to perform optimal design of a semiconductor, and only repeats trial and error, and therefore requires time for design. In addition, even if the technique disclosed in Patent Document 1 is used, it still takes time for design.

The present invention has been made in view of such a situation, and an object of the present invention is to significantly shorten a time required from design of a semiconductor to production thereof.

### Solution to Problem

A design assistance system according to the present invention includes: a design unit that designs a wafer process of manufacturing a wafer and a packaging process of manufacturing a package from the wafer; a wafer process unit that manages the wafer process; a package unit that manages the packaging process for the wafer manufactured by the wafer process unit; and an integration device that acquires wafer process information measured in the wafer process from the wafer process unit, acquires packaging process information measured in the packaging process from the package unit, and provides, to the design unit, design assistance information obtained on the basis of the wafer process information and the packaging process information.

### Advantageous Effects of Invention

According to the present invention, by providing design assistance information on the basis of information obtained by manufacturing a semiconductor, it is possible to significantly shorten a time required from design of a semiconductor to production thereof.

Problems, configurations, and effects other than those described above will be clarified by description of the following embodiments.

### Brief Description of Drawings

Fig. 1 is an overall configuration diagram illustrating an example of a semiconductor manufacturing process according to an embodiment of the present invention.
Fig. 2 is a diagram illustrating an example of a post-process in a packaging process according to an embodiment of the present invention.
Fig. 3 is a block diagram illustrating an overall configuration example of a design assistance system according to an embodiment of the present invention.
Fig. 4 is a block diagram illustrating an internal configuration example of an integration device according to an embodiment of the present invention.
Fig. 5 is a flowchart illustrating an example of an AI-assisted design solution provided by a design unit according to an embodiment of the present invention.
Fig. 6 is a diagram illustrating a difference between data obtained by a batch method and data obtained by a single wafer processing method according to an embodiment of the present invention by an experiment.
Fig. 7 is a diagram illustrating contents of data obtained by a batch method and data obtained by a single wafer processing method according to an embodiment of the present invention.
Fig. 8 is a diagram illustrating a difference between a turn around time in a conventional manufacturing method and a turn around time in a manufacturing method according to the present embodiment.
Fig. 9 is a diagram for explaining a manufacturing method using a complete single wafer processing device according to an embodiment of the present invention.
Fig. 10 is a diagram illustrating an operation example of a navigator/manager according to an embodiment of the present invention.
Fig. 11 is a diagram illustrating an example of heterogeneous assembly (hetero) design by a chiplet according to an embodiment of the present invention.
Fig. 12 is a diagram illustrating an example of three types of processing capable of shortening a turn around time of packaging according to an embodiment of the present invention.
Fig. 13 is a diagram illustrating an example of a change in turn around time in a packaging process according to an embodiment of the present invention.

### Description of Embodiments

Hereinafter, embodiments of the present invention will be described with reference to the attached drawings. In the present specification and the drawings, components having substantially the same function or configuration are denoted by the same reference numerals, and redundant description is omitted.

### [Embodiment]

### <Example of semiconductor manufacturing process>

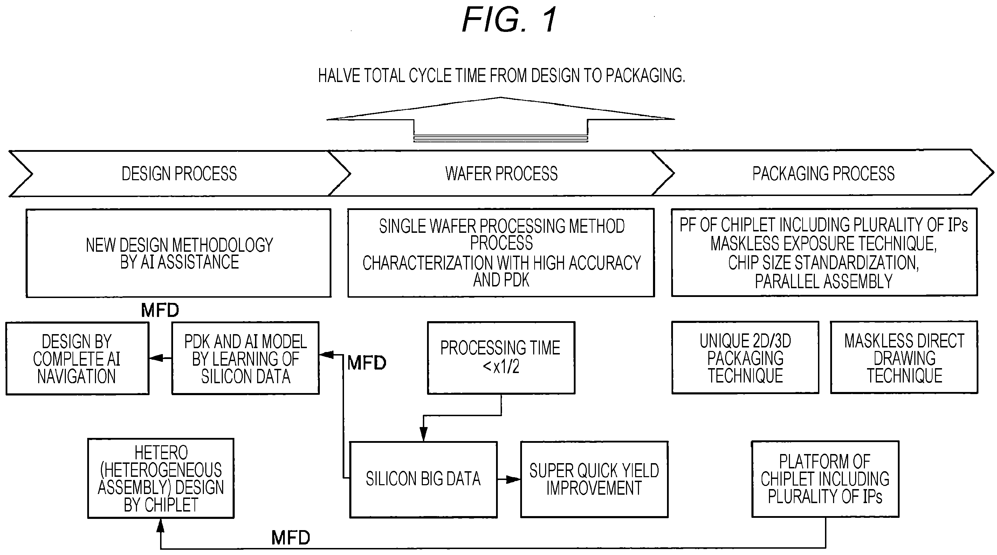

Fig. 1 is an overall configuration diagram illustrating an example of a semiconductor manufacturing process according to an embodiment.

The semiconductor manufacturing process is roughly divided into a design process, a wafer process of manufacturing a wafer, and a packaging process of manufacturing a package from the wafer. In the present embodiment, a manufacturing technique for design is referred to as manufacturing for design (MFD), and is distinguished from design for manufacturing (DFM), which is a conventional design technique for manufacturing. MFD is a methodology for assisting design on the basis of data obtained in the wafer process and the packaging process.

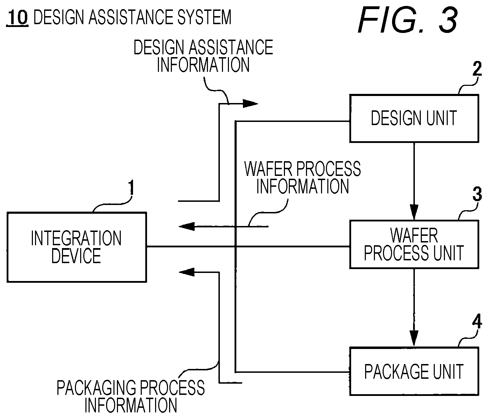

In a design assistance system 10 (see Fig. 3 described later) according to the present embodiment, design-manufacturing co-optimization (DMCO) representing coordination and optimization of design of a semiconductor and manufacturing thereof can be performed by repeating MFD and DFM. As a result, the design assistance system 10 according to the present embodiment aims to halve a total cycle time from design of a semiconductor to packaging thereof.

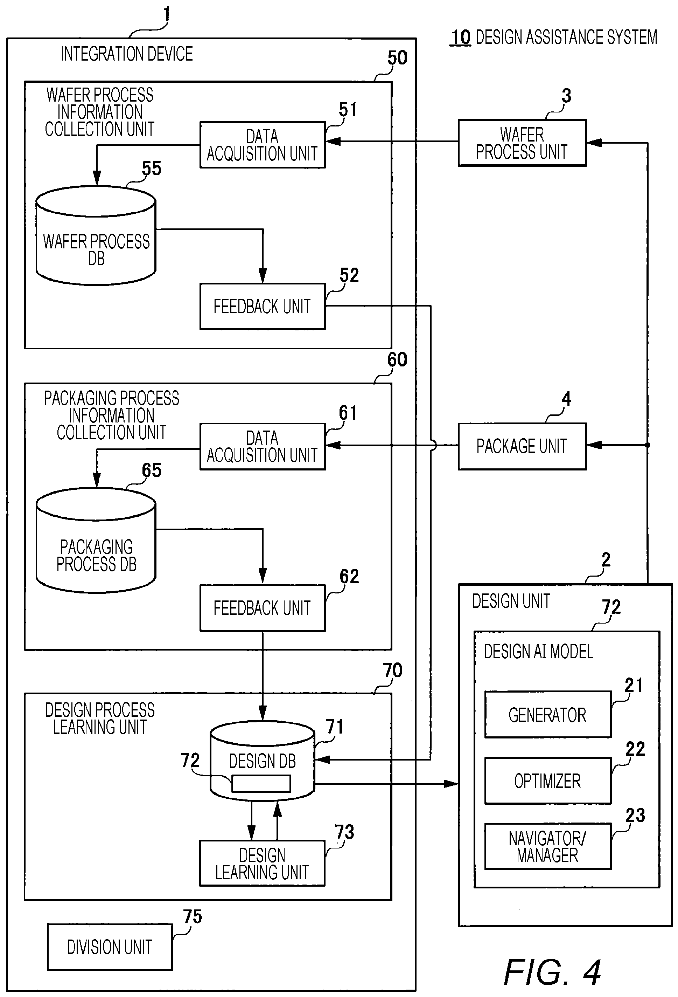

In the design process, a semiconductor and circuit placement are designed. In the present embodiment, a new design methodology assisted by an artificial intelligence (AI) model is provided to a customer who is a customer of the present applicant. For example, the AI model learns silicon big data measured by various measurement devices in the wafer process and the packaging process, whereby each AI model illustrated in Fig. 4 described later is trained, and performance of a process design kit (PDK) is improved. Then, in the present embodiment, since design by a customer designer is assisted by using the trained AI model in the design process, automation of semiconductor design proceeds.

PDK contains information on technology necessary for semiconductor design, such as what kind of device model exists, what kind of design rule should be used for design, or what kind of regulatory component is extracted. A designer designs a semiconductor by importing this information into a PDK tool. MFD learned by the AI model from the silicon big data illustrated in Fig. 1 and MFD that assists design by the AI model navigating a designer are constituted by a layered structure.

### (General wafer process and packaging process)

The wafer process and the packaging process are each divided into a pre-process and a post-process. The pre-process includes a front end of line (FEOL) in which element formation is performed, a back end of line (BEOL) in which wiring formation is performed, and a wafer characteristic test.

FEOL includes, for example, a cleaning step, a film forming step, a photolithography step, an etching step, an ion implantation step, and a wafer test step, and these steps are repeatedly performed. BEOL includes, for example, a cleaning step, a film forming step, a photolithography step, an etching step, a planarization step, and a wafer test step for a wafer manufactured through FEOL, and these steps are repeatedly performed.

In the wafer characteristic test in the wafer test step, an electrical characteristic test of a wafer is performed on a wafer manufactured through BEOL. When the wafer characteristic test is finished, a wafer is completed.

The post-process includes an assembly process and a test process. The assembly process includes a dicing step, a die bonding step, a wire bonding step, and a molding step for a wafer determined to be non-defective as a result of the wafer characteristic test. The test process includes a final test step for a semiconductor generated by the molding step. The post-process including such an assembly process and a test process is performed in a simple packaging process by wire bonding of one chip, a complicated packaging process in which a plurality of chips are stacked, or the like. When the final test step is finished, a packaged semiconductor (also referred to as a chip) is completed.

### (Wafer process and packaging process according to present embodiment)

Generally, in a wafer process, there are a batch method in which processes of wafers in a lot are the same and a single wafer processing method in which wafers in a lot are processed one by one and a process of each wafer can be changed, and both are usually mixed. In the wafer process according to the present embodiment, all steps are processed by a single wafer processing method. As a result, a time required for completion of one lot can be reduced to less than a normal time required for completion. Furthermore, by performing trial production while changing conditions for each wafer, a large amount of data is accumulated within the same time as compared with a process including the batch method, and silicon big data is formed. The silicon big data contributes to improvement in wafer yield in the wafer process. In addition, the silicon big data is used for learning of an AI model (a design AI model 72 in Fig. 4 described later) in the design process (MFD). In addition, in the wafer process, a processing time (x) for one wafer can be reduced to less than a half of a conventional time by the single wafer processing method.

At present, a chiplet technique is in progress, and the packaging process is a process of mounting a multi-chip obtained by highly bonding a plurality of wafers and wafers, a plurality of wafers and chips, and a plurality of chips and chips on a substrate, and combinations thereof are very diverse and complicated.

In the post-process described next, conceptually, a wafer completed in the pre-process is formed into a chip, the chip is mounted on a substrate (such as a silicon substrate) having another type of rewiring, and then the substrate is mounted on a final packaging substrate. Since a substrate having another type of rewiring is mounted on the packaging substrate, a plurality of chips having functions are assembled and connected. Therefore, even if all functions are not assembled on one chip, equivalent functions can be implemented by a product of the packaging substrate in which a plurality of chips having functions are assembled.

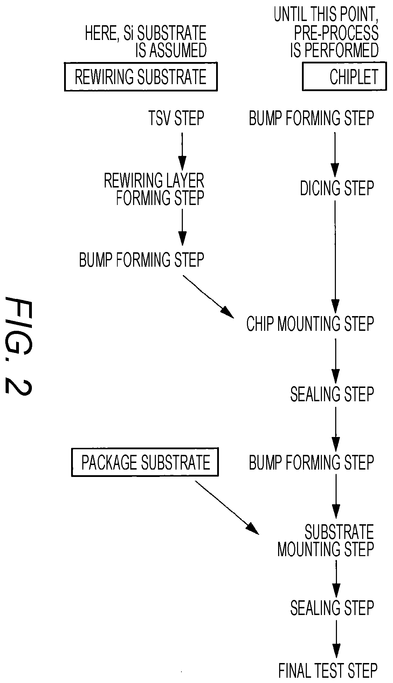

Fig. 2 is a diagram illustrating an example of a post-process in a packaging process that can perform formation into a multi-chip.

For example, a bump forming step and a dicing step are performed on a wafer manufactured in the above-described pre-process. In addition, a through-silicon via (TSV) step, a rewiring layer forming step, and a bump forming step are performed on a rewiring substrate. Thereafter, a chip mounting step in which a chip divided by the dicing step and a rewiring substrate are combined is performed, a sealing step and a bump forming step are performed, and then a substrate mounting step for a packaging substrate is performed. When a sealing step is further performed, a final test step is performed.

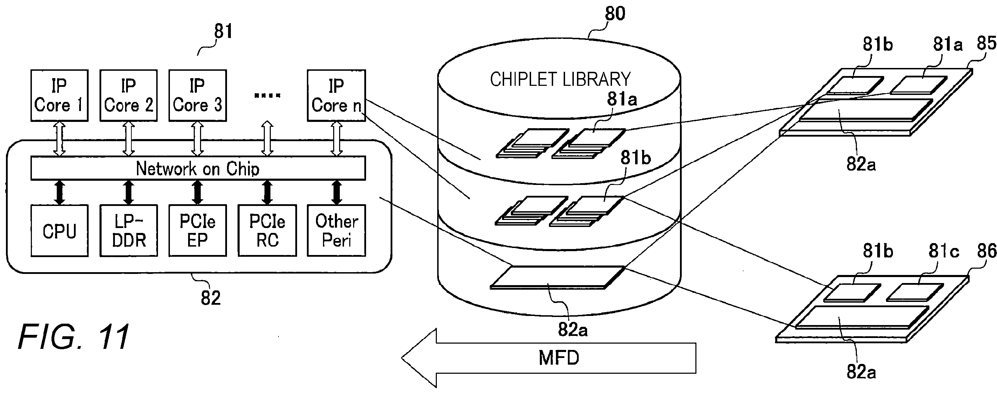

In the design process, hetero (heterogeneous assembly) design by a chiplet technique is possible on the basis of design assistance information received from a platform of the chiplet technique including a plurality of IPs. In the semiconductor field, a functional block constituting a large scale integration (LSI) such as a CPU, an image processing circuit, or a memory is regarded as a design asset, and is referred to as an intellectual property (IP) core or simply as IP. In the present specification, IP will be described as a circuit element in semiconductor design. Various circuit elements are assumed, such as a simple standard cell, a functional block of an interface, and a CPU core. Details of the chiplet will be described later with reference to Fig. 11 and subsequent drawings.

### <Configuration example of design assistance system>

Fig. 3 is a block diagram illustrating an overall configuration example of the design assistance system 10 according to the present embodiment. The design assistance system 10 includes an integration device 1, a design unit 2, a wafer process unit 3, and a package unit 4.

The integration device 1 provides a platform that can be arbitrarily accessed from the design unit 2, the wafer process unit 3, and the package unit 4. Therefore, the integration device 1 acquires wafer process information measured in the wafer process of manufacturing a wafer from the wafer process unit 3, acquires packaging process information measured in the packaging process from the package unit 4, and provides design assistance information obtained on the basis of the wafer process information and the packaging process information to the design unit 2.

By using the wafer process information as silicon big data and using the packaging process information as packaging big data, the integration device 1 performs analysis thereof by the design AI model 72 illustrated in Fig. 4 described later to create design assistance information. In the analysis by the design AI model 72, a correlation between various types of parameters or the like based on the silicon big data and the packaging big data is required. The design AI model 72 provides design assistance information including an optimal combination of parameters, values, and the like to the design unit 2.

The design unit 2 designs the wafer process and the packaging process of a wafer. Since an optimal design of a semiconductor can be performed by the design assistance information provided from the integration device 1 and a design assist function of the AI model, the design unit 2 can increase a convergence speed of design. Note that the design unit 2 may take information indicating that a designer has designed a semiconductor therein using the design assist function of the AI model, or may take information indicating that the AI model has designed a semiconductor by itself therein.

The wafer process unit 3 has a function of managing the wafer process, and manufactures a wafer on the basis of design information designed by the design unit 2. The wafer process unit 3 transmits data measured by various measurement devices in the wafer process to the integration device 1 as wafer process information.

The package unit 4 has a function of managing a packaging process for a wafer manufactured by the wafer process unit 3. The package unit 4 performs a packaging process of placing various chips on a substrate and wiring the plurality of chips on the wafer manufactured by the wafer process unit 3 on the basis of placement information designed by the design unit 2. In addition, the package unit 4 transmits data measured by various measurement devices in the packaging process to the integration device 1 as packaging process information.

Fig. 4 is a block diagram illustrating an internal configuration example of the integration device 1 according to the present embodiment. The integration device 1 operates as a platform that provides functions of units of the design unit 2. The integration device 1 includes a wafer process information collection unit 50, a packaging process information collection unit 60, a design process learning unit 70, and a division unit 75. Conventionally, correlation data has been acquired from data acquired in a wafer process on the basis of knowledge of an engineer. On the other hand, in the present system, the design AI model 72 can extract new correlation data with high accuracy from a large amount of data that cannot be handled by an engineer.

The wafer process information collection unit 50 accumulates wafer process information acquired for each wafer manufactured in the wafer process, and outputs the wafer process information to the design process learning unit 70. The wafer process information collection unit 50 includes a data acquisition unit 51, a feedback unit 52, and a wafer process data base (DB) 55.

The data acquisition unit 51 acquires a large number of pieces of data for each wafer in the wafer process as wafer process information. The data acquired by the data acquisition unit 51 is accumulated in the wafer process DB 55.

The feedback unit 52 outputs data (wafer process information) read from the wafer process DB 55 to the design process learning unit 70.

The packaging process information collection unit 60 accumulates packaging process information acquired each time a chip cut out from a wafer manufactured in the packaging process is packaged, and outputs the packaging process information to the design process learning unit 70. The packaging process information collection unit 60 includes a data acquisition unit 61, a feedback unit 62, and a packaging process DB 65.

The data acquisition unit 61 acquires a large number of pieces of data measured for each packaged product in the packaging process as packaging process information. The data acquired by the data acquisition unit 61 is accumulated in the packaging process DB 65.

The feedback unit 62 outputs data (packaging process information) read from the packaging process DB 65 to the design process learning unit 70.

The design process learning unit 70 includes the design AI model 72 that obtains first design assistance information for assisting design of the wafer process on the basis of the wafer process information and obtains second design assistance information for assisting design of the packaging process on the basis of the packaging process information. The design process learning unit 70 includes a design DB 71 and a design learning unit 73.

The design DB 71 accumulates the wafer process information provided from the wafer process information collection unit 50 and accumulates the packaging process information provided from the packaging process information collection unit 60.

In addition, the design DB 71 stores the design AI model 72 used in the design process. The design AI model 72 has a function of assisting various designs in the design process. Therefore, the design AI model 72 provides functions of a generator 21, an optimizer 22, and a navigator/manager 23 to the design unit 2.

As machine learning in the design AI model 72, any one of unsupervised learning, supervised learning, and reinforcement learning is used according to a DMCO application. For example, in the optimizer 22 and the navigator/manager 23 described later, reward-type machine learning of what kind of wiring and what kind of design policy are more preferable is performed, and thus reinforcement learning is likely to be used.

For example, when the optimizer 22 obtains a correlation between manufacturing data and an electrical characteristic, supervised learning in which the electrical characteristic is used as a correct answer of an output result is used. For example, in processing in which the optimizer 22 automatically classifies defect data, unsupervised learning is used.

The machine learning in the design AI model 72 is not limited to these types of machine learning.

The design learning unit 73 performs machine learning or the like on the basis of the wafer process information and the packaging process information accumulated in the design DB 25 to update the design AI model 72. The updated design AI model 72 is stored in the design DB 71.

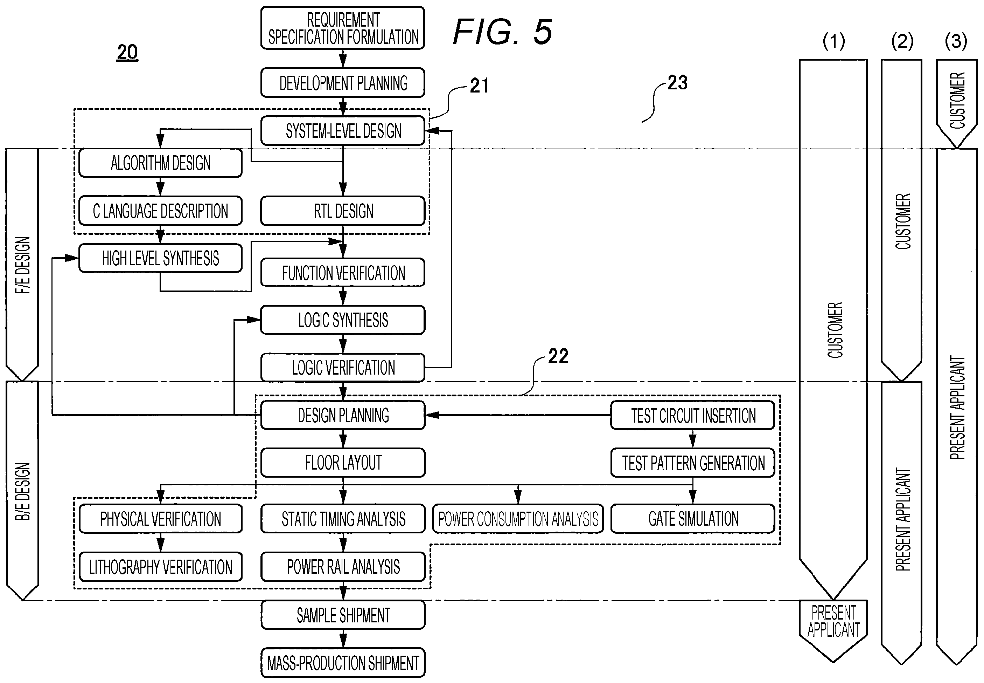

The division unit 75 sets a division range of processes of a designer who is a customer and a person who manufactures a wafer on the basis of the design (for example, a manufacturer who is the present applicant). The division unit 75 can arbitrarily set the division range of the processes of the designer and the present applicant and can divide the processes. In the present embodiment, a plurality of steps included in the design process are divided, and the design unit 2 assists design by a customer designer according to the division range. The division range is illustrated in Fig. 5 described later.

The design unit 2 includes the generator 21, the optimizer 22, and the navigator/manager 23 as functions provided by the design AI model 72.

The generator 21 has a function of generating a code necessary for design on the basis of a specification described in a natural language.

The optimizer 22 performs processing of searching for an optimal solution of a combination of design parameters under various predetermined constraints. For example, the optimizer 22 searches for an optimal solution of a combination by reducing a leakage current while maintaining a clock frequency, and when obtaining the optimal solution, outputs information on the optimal solution to the navigator/manager 23.

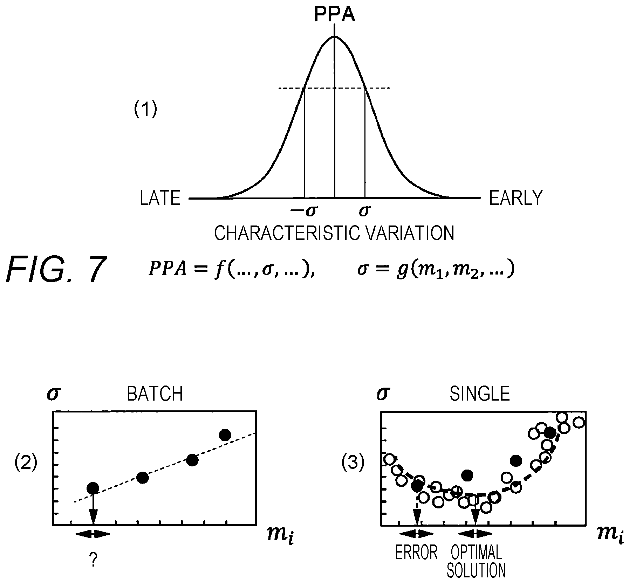

By providing at least one of the first design assistance information and the second design assistance information on the basis of the combination optimal solution, the navigator/manager 23 navigates design to a designer and manages the design by the designer. For example, the navigator/manager 23 has a function of navigating a designer in order to advance performance power area (PPA) convergence of a current design on the basis of past design experience. PPA will be described with reference to Fig. 7 described later.

In the navigator/manager 23, the navigation is a function related to an entire design flow. In order to advance various steps included in the design process, the navigator/manager 23 navigates a designer such that there is no repeated step in light of past experience. In the navigator/manager 23, the management is a function of planning and managing design itself. For example, when designing a chip of a certain specification, the navigator/manager 23 performs planning for performing design, indicating blocks into which a system on chip (SoC) is divided, in order to advance design without a bottleneck.

Fig. 5 is a flowchart illustrating an example of an AI-assisted design solution. The AI-assisted design solution is provided to a customer by the design AI model 72 that operates in the design unit 2.

In semiconductor design, first, a required specification of a semiconductor is formulated (requirement specification formulation). Thereafter, development planning is formulated, and a system level is designed (system-level design). After the system level is designed, F/E design for designing a front end and B/E design for designing a back end are performed.

The F/E design includes algorithm design to logic verification. In the F/E design, after an algorithm is designed by a designer, for example, the algorithm is rewritten in C language as a program. Thereafter, high level synthesis of automatically generating a hardware description language with operation description in C language as an input is performed. In addition, after a system level is designed by a designer, resister transfer level (RTL) design for implementing a logic circuit or the like by a hardware description language is performed. After RTL design or high level synthesis, function verification is performed, logic synthesis is performed, and then logic verification is executed. After logic verification, the process returns to system-level design again or proceeds to next B/E design.

In the B/E design, design planning is performed on the basis of a result of logic verification in the F/E design and a result of test circuit insertion. After the design planning is performed, floor layout is designed. After the floor layout is performed, physical verification is performed, and lithography verification is performed.

In addition, after the floor layout is performed, static timing analysis and power rail analysis are performed. The power rail analysis also includes signal integrity. In addition, after the floor layout is performed, power consumption analysis is performed. On the other hand, after the above-described test circuit insertion is performed, test pattern generation is performed, and after the floor layout is performed, gate simulation is executed. The contents of each design included in the B/E design have been described so far.

The B/E design includes up to physical verification including floor layout, timing, and power analysis. After the B/E design, the wafer process and the packaging process illustrated in Fig. 1 are performed. That is, after the power rail analysis, shipment of a sample produced by the wafer process and the packaging process (sample shipment) is performed, and an operation of a sample is verified. When the sample operation is favorable, mass-production products produced by the wafer process and the packaging process are shipped (mass-production shipment).

The AI-assisted design solution illustrated in Fig. 5 includes three elements (generator 21, optimizer 22, and navigator/manager 23) provided by the design AI model 72 illustrated in Fig. 4 to the design unit 2.

The generator 21 includes, for example, system-level design, algorithm design, program description, and RTL design in the F/E design as illustrated in a range surrounded by the upper broken line in Fig. 5. The generator 21 automatically generates a code or the like by a program.

The optimizer 22 includes, for example, design planning, floor layout, physical verification, lithography verification, static timing analysis, power rail analysis, power consumption analysis, test circuit insertion, test pattern generation, and gate simulation in the B/E design, as similarly illustrated in a range surrounded by the lower broken line in Fig. 5. The optimizer 22 obtains optimal conditions in various processes, and encourages a designer to perform design under optimal conditions.

The navigator/manager 23 can optimize layered design that implements short turn around time (TAT) design according to the present embodiment. TAT means a time required from start to completion of a certain process. A long period from design start to manufacturing completion of a semiconductor may be referred to as TAT, or a period from design start to design completion in a design process may be referred to as TAT as described in the present embodiment.

As illustrated as (1) to (3) on the right side of Fig. 5, and as described above, a coverage range of the present applicant and a coverage range of a customer can be arbitrarily divided. The division of the coverage range is determined by design capability of a customer and a business model of the customer, and the division unit 75 illustrated in Fig. 4 manages the divided coverage range.

For example, in the division illustrated in (1) of Fig. 5, a customer who makes full use of a manufacturing technique of the present applicant is responsible for a whole design including the F/E design and the B/E design from development planning, and the present applicant manufactures and ships sample products or ships mass-produced products.

In the division illustrated in (2) of Fig. 5, a customer is responsible for development planning to the F/E design, and the present applicant performs the B/E design, and manufactures and ships sample products or ships mass-produced products. A customer in such a case is a customer who desires to entrust the present applicant with design corresponding to a manufacturing technique, that is, burdensome B/E design.

In the division illustrated in (3) of Fig. 5, a customer who has little design experience but desires to produce a product using a semiconductor is responsible for up to system-level design, and the present applicant is responsible for all subsequent processes.

Conventionally, various vendors provide various design tools for each block illustrated in Fig. 5. Due to an increase in complexity of design rules and constraints associated with miniaturization in recent years, design has become advanced, and it has become increasingly difficult for a designer to use a design tool for implementing design well. In addition, in the F/E design, there has been a tendency that a designer performs design by packing circuits capable of implementing various functions in one semiconductor so as to obtain as many functions as possible.

On the other hand, in the B/E design, physical design is performed. For this reason, a back end designer packs as many cells as possible into a small area of a wafer and designs how to perform wiring. As a result, the back end designer has often needed more time for performing design to implement a function designed by a front end.

On the other hand, the system-level design, the algorithm design, and the rewriting in C language illustrated in Fig. 5 may be automatic generation processing in which the design AI model 72 that has analyzed a specification written in a natural language automatically generates a machine language. In addition, the design AI model 72 can also automatically perform processing of comprehensively covering processing in the B/E design, and searching for and optimizing an optimal combination of parameters in consideration of various constraints.

Furthermore, the design AI model 72 can determine whether a design is good or bad by learning various designs or patterns performed in the past. Therefore, the design AI model 72 has, for example, an assistance function of proposing an optimal combination of design tools to a designer such that the designer can perform an optimal design.

According to the AI-assisted design solution illustrated in Fig. 5, a cycle time can be halved as compared with a conventional design method. In addition, in the AI-assisted design solution according to the present embodiment, ability of a skilled designer can be replicated by a navigator. Therefore, even an unskilled designer can design a semiconductor in a similar manner to a skilled designer.

In a conventional design method, the number of times of engineering change order (ECO) at a final stage of design is large, and a time for the design is long. On the other hand, by using the AI-assisted design solution according to the present embodiment, the number of times of ECO can be significantly reduced, and TAT can be further shortened.

### <Difference between data obtained by batch method and data obtained by single wafer processing method>

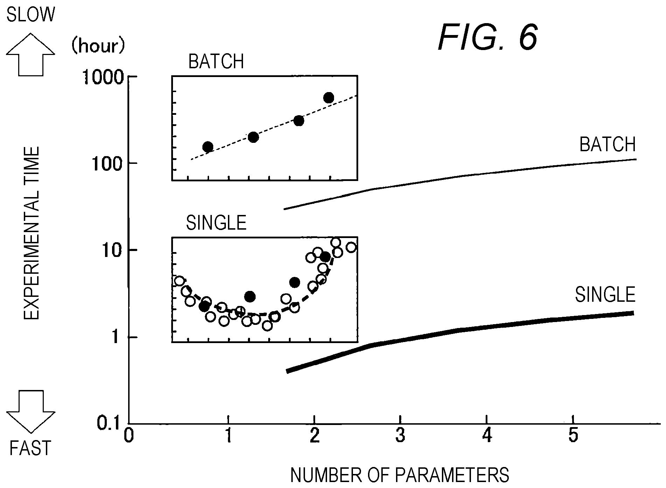

Next, a difference between data obtained in a conventional manufacturing process and data obtained in the manufacturing process according to the present embodiment, and a difference between results derived from the data will be described with reference to Figs. 6 and 7.

Fig. 6 is a diagram illustrating a difference between data obtained by a batch method and data obtained by a single wafer processing method by an experiment. In Fig. 6, the horizontal axis represents the number of parameters that can be acquired at the time of semiconductor production, and the vertical axis represents an experimental time. The parameter represented by the horizontal axis is a value (for example, 850°C, 900°C, or 950°C in a case of temperature) obtained by applying a certain process condition (for example, temperature, pressure, flow rate, or plasma power). The experimental time represented by the vertical axis is a time until a semiconductor manufactured under a certain process condition is obtained.

In the batch method, the same processing is collectively performed on a large number of wafers. A black dot illustrated in Fig. 6 indicates data acquired each time processing is performed. As illustrated as "batch" in Fig. 6, it is indicated that a linear graph is created by connecting four black dots.

On the other hand, in the single wafer processing method (described as "single" in Fig. 6), data obtained in a manufacturing process for each wafer is indicated by a large number of white dots.

Note that Fig. 6 indicates a difference between the data obtained by the single wafer processing method and the data obtained by the batch method. That is, in the batch method in Fig. 6, since a processing time is long, there are, for example, only four pieces of data (black dots) obtained in the same experimental time as the single wafer processing method, the pieces of data are placed substantially linearly, and therefore the graph changes linearly. On the other hand, in the single wafer processing method (single), since a large number of pieces of data can be acquired in the same experimental time, the graph has a non-linear change.

Fig. 7 is a diagram illustrating contents of data obtained by the batch method and data obtained by the single wafer processing method.

The explanatory diagram (1) on an upper side of Fig. 7 illustrates a graph of PPA. The graph of PPA represents a density distribution function of a certain characteristic parameter. The horizontal axis of the graph represents a characteristic variation. For example, a threshold voltage of a transistor has a characteristic variation due to a manufacturing variation. If the characteristic variation is high, a response is late, and if the characteristic variation is low, the response is early.

PPA is designed using various parameters of PDK. PPA is represented by a function having a plurality of types of σ as variables as illustrated in the following formula (1). $PPA = f \left(⋯, σ,⋯\right)$ (1')

Here, σ represents a variation in the most important design parameter. The design parameter is a parameter set by a designer at the time of designing a semiconductor. For example, σ is formed by a value directly linked to physical manufacturing, such as alignment accuracy of a device, a flow rate of a gas, and a temperature of a furnace body. Ultimately, PPA of a chip is a function of a manufacturing parameter. The manufacturing parameter is a parameter set in a manufacturing device at the time of manufacturing a semiconductor. This σ is expressed by a function having a plurality of manufacturing parameters m as variables as illustrated in the following formula (2). $σ = g \left({m}_{1}, {m}_{2},⋯\right)$ (2)

Usually, a designer performs various designs on the basis of the data σ incorporating manufacturing parameters m₁, m₂,..., and thus does not pay attention to physical information. In addition, since a complicated process in semiconductor manufacturing is expressed by σ, a designer does not need to know how semiconductor manufacturing is performed.

The graph illustrated in Fig. 6 is illustrated again on a lower side of Fig. 7. The graph (2) of Fig. 7 represents data obtained by a batch method, and the graph (3) of Fig. 7 represents data obtained by single, that is, a single wafer processing method.

As described above, σ is a value determined by a correlation between parameters in manufacturing. A designer desires to minimize a variation in design parameters, and the earlier the reduction of the variation, the better. A smaller value of σ is a better value, but in the data obtained by the batch method, a linear graph is drawn by a correlation between a small number of mᵢ parameters indicated by black dots in Fig. 7. Therefore, even if a designer performs fitting with the smallest σ, it is not clear whether this σ is a minimum value. In addition, when a minimum value of σ swings to the left and right, the amount of change in σ increases, and thus semiconductor manufacturing is not stable.

On the other hand, in the single wafer processing method, a non-linear graph is drawn by a correlation between many mᵢ parameters indicated by white dots in Fig. 7. In this graph, since a minimum value of σ is clear, an optimal solution can be easily found. Therefore, the optimizer 22 illustrated in Fig. 4 can obtain a minimum value of a function having a plurality of manufacturing parameters as variables as an optimal solution for each of the wear process information and the packaging process information, and the navigator/manager 23 can navigate the optimal solution to a designer.

Note that the portion indicated as an error in the graph (3) is a value determined to be a minimum value of σ in the graph (2) representing data obtained by the batch method. Actually, the portion indicated as an error in the graph (3) is not a minimum value of σ and has a large slope of the graph. For this reason, a change in σ tends to be large with a slight deviation of mᵢ. On the other hand, since the portion indicated as an optimal solution in the graph (3) has a small slope of the graph, if this portion is a minimum value of σ, σ is less likely to change even if mᵢ changes.

As described above, if a designer does not notice an optimal value of σ and performs fitting at an incorrect position, quality of a manufactured semiconductor varies, and a large number of semiconductors that do not pass a test in a subsequent process are produced. In design of a semiconductor, how early a minimum value of σ can be found in advance is important for the design. Therefore, it can be said that an advantage of finding the minimum value of σ by adopting the single wafer processing method is much larger than an advantage of adopting the batch method.

In addition, a designer can accelerate verification of PDK by combining silicon big data and a TCAD (Technology CAD) model. For example, first, the designer predicts a correlation between a manufacturing parameter and a design parameter using TCAD. Subsequently, the designer can verify a correlation between a manufacturing parameter and a design parameter using the silicon big data by MFD in which the silicon big data obtained in a complete single wafer processing method process is analyzed by the design AI model 72.

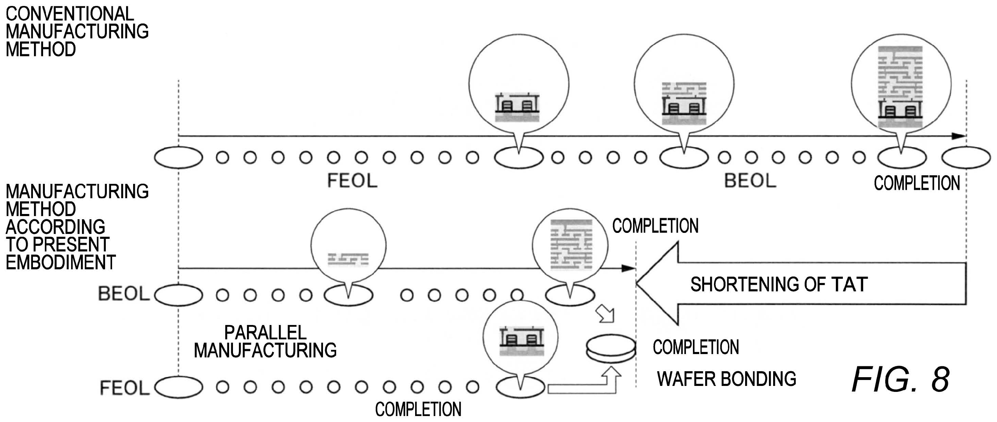

Fig. 8 is a diagram illustrating a difference between TAT in a conventional manufacturing method and TAT in the manufacturing method according to the present embodiment.

In the conventional manufacturing method indicated in an upper side of Fig. 8, a state in which a back end of line (BEOL) is executed after a front end of line (FEOL) is executed, and semiconductor manufacturing is completed is illustrated. As described above, a time from start to completion of semiconductor manufacturing is referred to as conventional TAT.

In the manufacturing method according to the present embodiment illustrated on a lower side of Fig. 8, the front end of line and the back end of line are simultaneously started, and a semiconductor is manufactured in parallel. That is, after both the front end of line and the back end of line are completed, a wafer generated in the front end of line and a wafer generated in the back end of line are bonded, and semiconductor manufacturing is completed.

Such a manufacturing method for bonding wafers is called wafer bonding. As described above, in the manufacturing method according to the present embodiment, TAT can be extremely shortened as compared with the conventional manufacturing method. Shortening of TAT in the manufacturing method according to the present embodiment is referred to as "shortening of TAT".

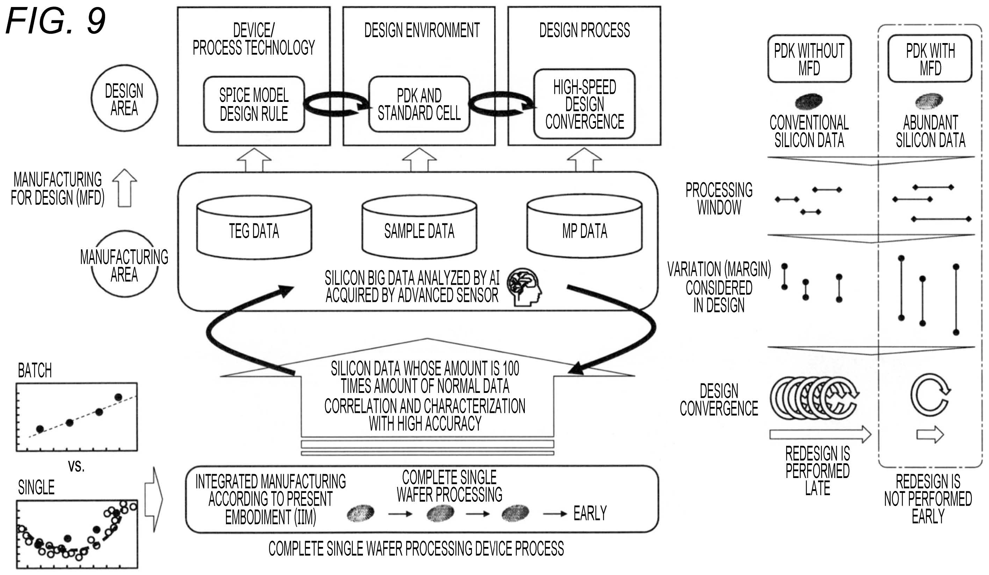

Fig. 9 is a diagram illustrating a manufacturing method using a complete single wafer processing device (not illustrated) according to the present embodiment. The complete single wafer processing device is a device used in the wafer process and the packaging process.

In a lower left part of Fig. 9, the graph illustrating a difference between data obtained by a batch method and data obtained by a single wafer processing method illustrated in Fig. 6 is illustrated. In the complete single wafer processing device according to the present embodiment, integrated production is performed for each wafer. In this integrated production, the amount of silicon data acquired from the complete single wafer processing device is, for example, nearly 100 times the amount of conventional data. Therefore, the silicon data acquired from the complete single wafer processing device is referred to as silicon big data.

The silicon big data is data acquired by an advanced measurement device and a sensor mounted on each device. The silicon big data is analyzed by the design AI model 72 after useful data is extracted.

In addition, the packaging big data is data acquired by an advanced measurement device and a sensor mounted on each device installed in the package process.

By variously combining various types of data included in the silicon big data, the design AI model 72 evaluates a correlation and characteristics with high accuracy, and makes correlation and characterization with high accuracy possible.

In the present embodiment, a series of processes in which data is delivered from a manufacturing area to a design area, and a tendency, an optimal value, and the like obtained from the data acquired in the manufacturing area are used in the design area is referred to as MFD.

The silicon big data includes, for example, test element group (TEG) data, sample data, and mass production (MP) data. Each of the TEG data, the sample data, and the MP data includes design data, test data of an electrical characteristic, manufacturing data at the time of manufacturing (measured length, film thickness, defect information, and the like), and the like.

The TEG data is data obtained using a foundry process verification mask including TEG. The TEG data is data obtained by a device and a process technology, and for example, a SPICE model or a design rule corresponds to the TEG data. The TEG data is used for a device and process technology in a design area.

The sample data is data obtained using an operation verification mask based on customer design. The sample data is data obtained in a design environment, and is, for example, data such as PDK or a standard cell.

The MP data is data obtained using a mass production product mask. The MP data is used for high-speed design convergence in a design process.

The SPICE model and the design rule in the device and process technology, PDK and the standard cell in the design environment, and the advanced design convergence in the design process are related to each other and affect each other.

On a right side of Fig. 9, comparative examples of PDK without MFD and PDK with MFD are illustrated. PDK without MFD is used for performing design using conventional silicon data, and a processing window as PDK without MFD is illustrated.

Using the conventional silicon data, the size of the processing window is small, and the data cannot be analyzed with high accuracy. On the other hand, in PDK with MFD, abundant silicon data (silicon big data) can be obtained, and therefore the size of the processing window is large. Therefore, in PDK according to the present embodiment, data analysis accuracy is improved.

In addition, regarding a variation (margin) considered in design, in PDK without MFD, a variation is small and design is also limited, and therefore redesign is performed many times, and convergence of the design is slow. On the other hand, in PDK with MFD according to the present embodiment, a variation is large, and the degree of freedom in design is improved. Therefore, in PDK with MFD, redesign is not performed, and thus convergence of the design is extremely fast.

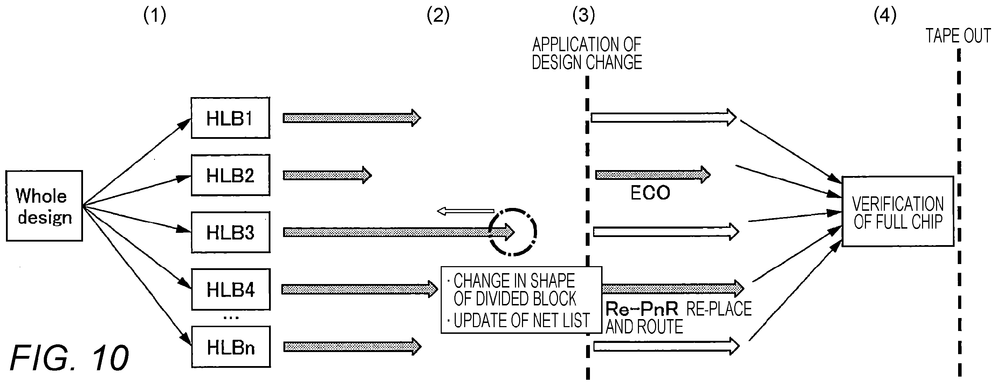

Fig. 10 is a diagram illustrating an operation example of the navigator/manager 23 described in Fig. 5. Here, an operation example in a chip design process of the navigator/manager 23 will be described. The navigator/manager 23 detects a design block to be a bottleneck from a plurality of design blocks obtained by dividing a whole design. Then, the navigator/manager 23 changes the design block to be a bottleneck, equalizes a time required for completing the plurality of design blocks designed in parallel, and navigates the changed plurality of design blocks to a designer. An operation example of the navigator/manager 23 will be described with reference to operations (1) to (4) illustrated in Fig. 10.

In the operation (1), the navigator/manager 23 performs an optimal design division for high-speed design convergence. For example, the navigator/manager 23 divides a whole design into a plurality of individual design blocks HLB1 to HLBn.

In the operation (2), the navigator/manager 23 detects a bottleneck at an early stage for each of the divided design blocks and finds a measure for eliminating the bottleneck. For example, as indicated by a dashed-dotted circle in Fig. 10, it is assumed that the navigator/manager 23 detects the design block HLB3 as a bottleneck. In this case, the navigator/manager 23 redesigns the design block such that the bottleneck can be eliminated. At this time, for example, the shape of each design block is changed, or a net list is updated.

In the operation (3), the navigator/manager 23 applies design change. At this time, the navigator/manager 23 makes a best plan for design change. For example, the navigator/manager 23 changes the size and shape of the design block. In addition, the navigator/manager 23 performs engineering change order (ECO) on the design block HLB2 so as not to largely affect a manufacturing schedule.

In addition, the navigator/manager 23 performs replace and route (PnR) of the design block HLB4. As a result, a manufacturing time of the block HLB3 detected as the bottleneck is shortened, and a manufacturing time of each of the design blocks HLB1 to HLBn is not affected by the bottleneck. Therefore, a design time of the whole design blocks HLB1 to HLBn is shortened.

In the operation (4), the navigator/manager 23 verifies a full chip. The full chip is a combination of the design blocks HLB1 to HLBn in which the bottleneck is eliminated in the operation (3). If a verification result in the operation (4) is good, design information is taped out and shared between the pre-process and the post-process.

Fig. 11 is a diagram illustrating an example of heterogeneous assembly (hetero) design by a chiplet. Fig. 11 illustrates a configuration example of a chiplet library 80 and a chiplet. The chiplet library 80 is constructed in, for example, the design DB 71 illustrated in Fig. 4. Therefore, the design process learning unit 70 includes the chiplet library 80 that accumulates information on a chiplet. In the packaging process according to the present embodiment, a platform of a chiplet including a plurality of circuit elements (IPs) is used.

On a left side of Fig. 11, an IP group including a specific IP, an AI accelerator, and the like that provide features of a customer's product is illustrated. An IP that a customer selects for his/her design is referred to as a domain-specific IP group 81. The individual IPs included in the domain-specific IP group 81 are indicated by "IP Core1", "IP Core2", and the like in Fig. 11.

Since the IP included in the domain-specific IP group 81 does not function as a product alone, a CPU for a control controller, a memory interface, and the like are required. The CPU for a control controller, the memory interface, and the like are general-purpose IPs that are generally used and can be shared, and thus are referred to as platform IPs 82 as a platform-like IP group. The platform IPs 82 are used as a platform of a chiplet.

The chiplet library 80 is a library in which an existing chiplet that can be combined according to use of a customer is accumulated. Various IPs included in the domain-specific IP group 81, the platform IPs 82, and the like are accumulated in the chiplet library 80. A customer can select any chiplet from the chiplet library 80.

The customer can design a customer-specific chiplet even if the chiplet is not stored in the chiplet library 80, thereby differentiating the customer-specific chiplet from a chiplet of another company. By using a chiplet selected from the chiplet library 80, the customer can early determine a configuration of a customer-specific system on a chip (SOC). For this reason, the customer can mount the custom chiplet designed by the customer himself/herself on a semiconductor substrate.

For example, an example is illustrated in which domain-specific IPs 81a and 81b acquired from the chiplet library 80 and a platform IP 82a are mounted on a substrate 85 illustrated on a right side of Fig. 11. In addition, an example is illustrated in which a domain-specific IP81b acquired from the chiplet library 80, a domain-specific IP81c newly created by the customer, and the platform IP 82a are mounted on a substrate 86. As described above, the common platform IP 82a is mounted on the substrates 85 and 86, and existing chiplets are mounted in combination on the substrate 85. In addition, an existing chiplet and a new chiplet are mounted in combination on the substrate 86.

Information on the chiplets mounted on the substrates 85 and 86 is stored in the chiplet library 80 and also fed back to a packaging design process as indicated by an arrow below Fig. 11 (MFD). Therefore, the design unit 2 can notify a designer of an optimal combination of chiplets to assist design of the chiplets. For example, the navigator/manager 23 navigates a combination of a platform circuit element (platform IPs 82) and a specific circuit element (domain-specific IP group 81) on the basis of combination information of the chiplets accumulated in the chiplet library 80. For this reason, conventionally, it takes time to determine a circuit element by trial and error, but in the present embodiment, a combination of circuit elements navigated by the navigator/manager 23 is determined early.

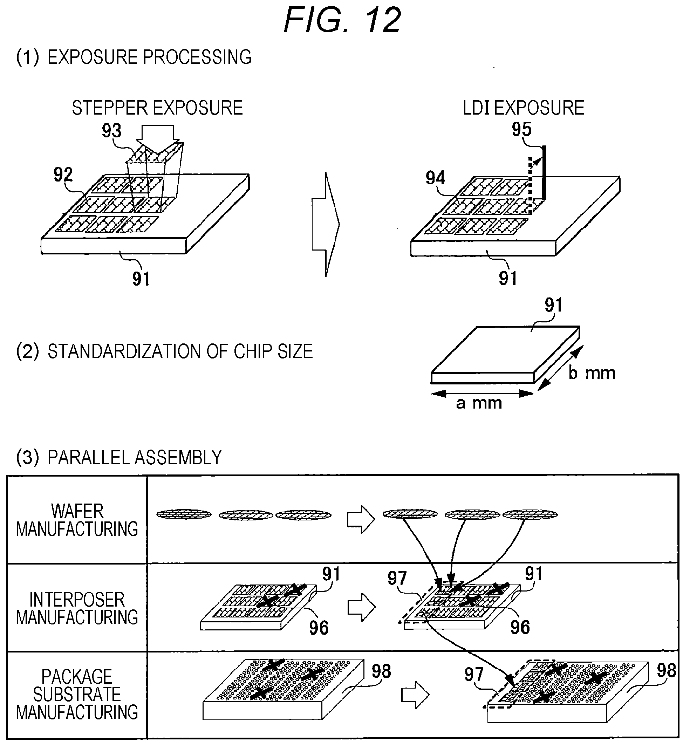

Fig. 12 is a diagram illustrating an example of three processes capable of shortening TAT of the packaging process.

In Fig. 12, an interposer is obtained by performing wiring processing on an inorganic material such as silicon by semiconductor pre-process technology. By mounting a plurality of chips on the interposer, the plurality of chips are connected.

In the packaging process according to the present embodiment, techniques such as laser direct imager (LDI) exposure (maskless exposure technique), chip size standardization, and parallel assembly illustrated in Fig. 12 are used. As the maskless exposure technique, for example, there is a maskless direct drawing technique in which a circuit is directly drawn by irradiation with a laser. As the chip size standardization and the parallel assembly, for example, a unique two-dimensional or three-dimensional packaging technique is used.

The two-dimensional packaging technique is a technique of placing a plurality of chips on a plane, and the three-dimensional packaging technique is a technique of placing a plurality of chips not only on a plane but also in a height direction.

Regarding various types of information obtained from the packaging process, useful information is extracted, sent to a design process, and used for learning (MFD). The optimizer 22 optimizes maskless direct drawing of an interposer in the packaging process, standardization of a chip size of the interposer, mounting of at least one or more chips on the interposer, and manufacturing of a package substrate. The navigator/manager 23 performs design assistance of navigating optimized information to a designer. Therefore, the designer can easily design a semiconductor on the basis of the optimized information.

The explanatory diagram (1) of Fig. 12 illustrates an example of a maskless exposure technique for forming a circuit pattern on a substrate. On a left side of the explanatory diagram (1), an example of conventional stepper exposure is illustrated. In the stepper exposure, a wiring pattern 92 is formed on an upper surface of an interposer 91 using a photomask 93. The wiring pattern 92 formed with the photomask 93 is the same at any position.

On a right side of the explanatory diagram (1), an example of LDI exposure according to the present embodiment is illustrated. The LDI exposure is one of maskless exposure techniques in which an upper surface of the interposer 91 is irradiated with a laser beam 95 to perform direct drawing in which a wiring pattern is drawn. The interposer 91 is irradiated with the laser beam 95 on the basis of three-dimensional CAD data designed by the design unit 2 (see Fig. 3). The laser beam 95 can change a wiring pattern 94 for each section of the interposer 91.

The explanatory diagram (2) of Fig. 12 illustrates an example of standardizing a chip size of the interposer 91. The chip size of the interposer 91 is standardized to a size of a mm × b mm, for example. In the present embodiment, by standardizing the chip size, it is not necessary to create the interposers 91 of various sizes, and therefore it is possible to unify setting of a conveyance mechanism or the like of the interposer 91.

The explanatory diagram (3) of Fig. 12 illustrates an example of parallel assembly of a packaging device. In the wafer manufacturing in the explanatory diagram (3), for example, a state in which three wafers are manufactured is illustrated. In the interposer manufacturing in the explanatory diagram (3), a defective portion 96 where a defect occurs in a part of a wiring pattern formed in the interposer 91 is indicated by a cross. In the conventional interposer manufacturing illustrated on a left side of the interposer manufacturing, the defective portion 96 is left as it is. On the other hand, in the interposer manufacturing according to the present embodiment, a plurality of chips determined to be non-defective in wafer manufacturing are mounted on non-defective portions 97 avoiding the defective portions 96.

In the package substrate manufacturing in the explanatory diagram (3), a package substrate 98 is manufactured. The package substrate 98 is usually subjected to wiring processing by semiconductor post-process technology on a substrate made of an organic material. At least one or more chips assembled in the interposer 91 are mounted on the package substrate 98 and packaged.

In the conventional package substrate manufacturing illustrated on a left side of the explanatory diagram (3) of Fig. 12, there is no relationship between the interposer manufactured by the interposer manufacturing and the defective portion. On the other hand, in the package substrate manufacturing according to the present embodiment, the non-defective portion 97 in the interposer 91 manufactured by the interposer manufacturing is directly mounted on the package substrate 98.

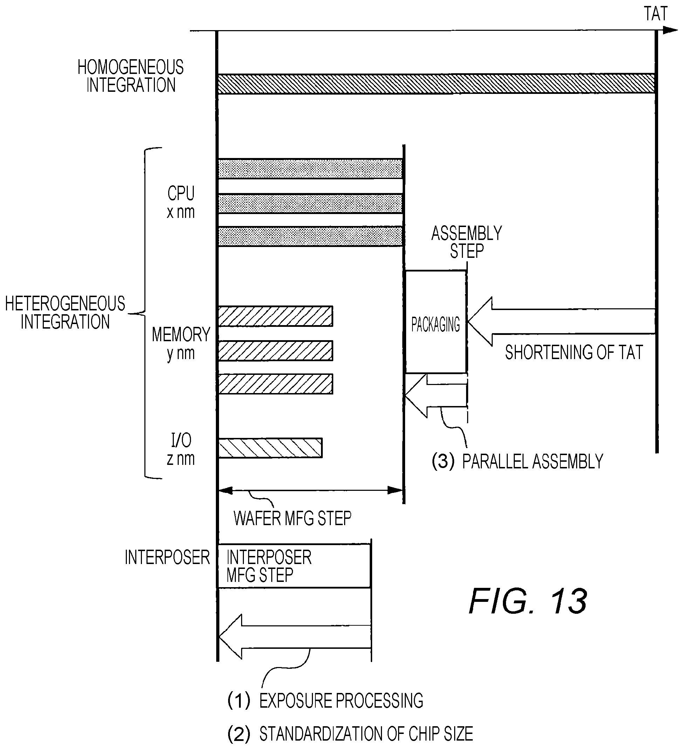

Fig. 13 is a diagram illustrating an example of change in TAT in the packaging process.

On an upper side of Fig. 13, an example of homogeneous integration is illustrated. In the homogeneous integration, all functions are assembled on one silicon chip, and therefore TAT is long.

On a lower side of Fig. 13, an example of heterogeneous integration is illustrated. In the heterogeneous integration, chiplets obtained by dividing functions are manufactured in parallel, and these chiplets are assembled in an assembly step.

As illustrated in Fig. 13, for example, a CPU (x nm), a memory (y nm), and an I/O (z nm) are manufactured in parallel. Processing suitable for the CPU (x nm) having the longest manufacturing time is referred to as a wafer MFG step. In addition, manufacturing of the interposer is also started at the same timing as a timing at which each unit for heterogeneous integration is manufactured. The processing of manufacturing the interposer is referred to as an interposer MFG step. (1) The exposure processing and (2) the standardization of the chip size described in Fig. 12 performed in the interposer MFG step contribute to shortening of a processing time of the interposer MFG step. The processing time of the interposer MFG step is shorter than a processing time of the wafer MFG step.

After the wafer MFG step, the assembly step is performed. In the assembly step, the chips are assembled in parallel on the interposer. As a result, in the packaging process, (3) parallel assembly described in Fig. 12 contributes to shortening of a processing time of the assembly step. Therefore, TAT by heterogeneous integration is shortened as compared with homogeneous integration.

In the design assistance system 10 according to the embodiment described above, the integration device 1 acquires the wafer process information from the wafer process unit 3 and acquires the packaging process information from the package unit 4. The design AI model 72 of the integration device 1 analyzes the wafer process information and the packaging process information, and provides information obtained for optimal parameter conditions and the like in each process to the design unit 2 as design assistance information. The design unit 2 provides the design assistance information suitable for design of a semiconductor to a designer, and assists design of each process in manufacturing the semiconductor. In the design process, a time required for the designer to perform trial and error is reduced, and a time required for design can be shortened.

Since the generator 21 of the design unit 2 illustrated in Fig. 4 has a function of generating a code necessary for design from a specification described in a natural language, a designer can concentrate on describing a specification in a natural language. Therefore, a code in which a specification is appropriately reflected can be automatically obtained as compared with a case where a designer analyzes a specification and generates a code by himself/herself as in related art.

The optimizer 22 of the design unit 2 optimizes each process included in the wafer process and the packaging process on the basis of the design assistance information received from the integration device 1. By calculating a correlation between various manufacturing parameters and tendencies of various manufacturing parameters on the basis of enormous silicon big data obtained in the single wafer processing method process, the design AI model 72 according to the present embodiment obtains an optimal solution.

By optimizing the wafer process and the packaging process designed by the design unit 2, unnecessary processing, overlapping processing, and the like at the time of actual semiconductor manufacturing are eliminated. Therefore, a designer does not need to redesign the semiconductor and the process, and TAT up to design completion can be shortened.

In addition, the navigator/manager 23 of the design unit 2 navigates the designer in order to advance PPA convergence of the current design on the basis of past design experience. For this reason, the designer can obtain an optimal solution that minimizes a variation in design parameters and advance design of a non-defective semiconductor.

In addition, in the chip design process illustrated in Fig. 10, a divided design block that can be a bottleneck is detected at an early stage. Thereafter, by changing the shape of the design block or the like, the bottleneck is eliminated. Therefore, a manufacturing time of the divided design block is made uniform, and a time up to manufacturing as a full chip is largely shortened as compared with a conventional manufacturing time.

In the chiplet library 80 illustrated in Fig. 11, the domain-specific IP group 81 and the platform IPs 82 are accumulated. A designer can select any chip from the chiplet library 80, combine at least one or more chips on a substrate, and perform design. Therefore, the degree of freedom in designing a chiplets can be increased.

In addition, as illustrated in Figs. 12 and 13, in the packaging process, direct drawing of a wiring pattern by irradiating an interposer with a laser beam, standardization of a chip size of the interposer, and parallel assembly are performed. Therefore, also in the packaging process, TAT by heterogeneous integration according to the present embodiment can be shortened as compared with conventional TAT by homogeneous integration.

Note that various manufacturing devices in the wafer process unit 3 and the package unit 4 may be disposed in a virtual space, and simulation of the manufacturing devices in the virtual space may be performed on the basis of the above-described silicon big data. In this simulation, the integration device 1 may again acquire information obtained from the virtual space manufacturing device that operates on the basis of various types of information designed by the design AI model 72 of the integration device 1, and information on a virtual wafer or the like. By repeating the simulation, it is possible to find a place where a defect is expected, to extract a process to be a bottleneck, and the like before actual wafer manufacturing, and it is possible to further improve design accuracy by the design unit 2.

Note that the present invention is not limited to the above-described embodiments, and it is obvious that various other application examples and modifications can be taken without departing from the gist of the present invention described in the claims.

For example, the above-described embodiments describe the components of the system in detail and specifically in order to describe the present invention in an easy-to-understand manner, and are not necessarily limited to those having all the described components. In addition, it is also possible to add other components to some of the components of the present embodiment, to delete some of the components of the present embodiment, or to replace some of the components of the present embodiment.

In addition, the control lines and the information lines indicate what is considered to be necessary for description, and do not necessarily indicate all the control lines and the information lines on the product. In practice, it may be considered that almost all components are connected to each other.

### Reference Signs List

- 1: Integration device
- 2: Design unit
- 3: Wafer process unit
- 4: Package unit
- 10: Design assistance system
- 21: Generator
- 22: Optimizer
- 23: Navigator/manager
- 50: Wafer process information collection unit
- 60: Packaging process information collection unit
- 71: Division unit
- 80: Chiplet library
- 81: Domain-specific IP group
- 82: Platform IPs
- 91: Interposer

## Claims

1. A design assistance system comprising:
a design unit that designs a wafer process of manufacturing a wafer and a packaging process of manufacturing a package from the wafer;
a wafer process unit that manages the wafer process;
a package unit that manages the packaging process for the wafer manufactured by the wafer process unit; and
an integration device that acquires wafer process information measured in the wafer process from the wafer process unit, acquires packaging process information measured in the packaging process from the package unit, and provides, to the design unit, design assistance information obtained on a basis of the wafer process information and the packaging process information.

2. The design assistance system according to claim 1, wherein
the integration device includes:
a wafer process information collection unit that accumulates the wafer process information acquired for each wafer manufactured in the wafer process;
a packaging process information collection unit that accumulates the packaging process information acquired each time a chip cut out from the wafer manufactured in the packaging process is packaged; and
a design process learning unit including a design AI model that obtains first design assistance information for assisting design of the wafer process on a basis of the wafer process information output from the wafer process information collection unit, and obtains second design assistance information for assisting design of the packaging process on a basis of the packaging process information output from the packaging process information collection unit.

3. The design assistance system according to claim 2, wherein
the design AI model includes:
a generator that generates a code necessary for design on a basis of a specification described in a natural language;
an optimizer that searches for a combination optimal solution of design parameters under a predetermined constraint; and
a navigator/manager that navigates design by providing at least one of the first design assistance information and the second design assistance information on a basis of the combination optimal solution and manages the design, and
a function of the design AI model is provided to the design unit.

4. The design assistance system according to claim 3, wherein
the optimizer obtains a minimum value of a function having a plurality of manufacturing parameters as variables as an optimal solution for each of the wafer process information and the packaging process information, and
the navigator/manager navigates the optimal solution.

5. The design assistance system according to claim 4, wherein
the navigator/manager detects the design block to be a bottleneck from a plurality of design blocks obtained by dividing a whole design, changes the design block to be a bottleneck, equalizes a time required for completing the plurality of design blocks designed in parallel, and navigates the changed plurality of design blocks.

6. The design assistance system according to claim 4, wherein
the design process learning unit includes a chiplet library that accumulates information on a chiplet, and
the navigator/manager navigates a combination of a platform circuit element and a specific circuit element on a basis of combination information of the chiplets accumulated in the chiplet library.

7. The design assistance system according to claim 6, wherein
the optimizer optimizes maskless direct drawing of an interposer in the packaging process, standardization of a chip size of the interposer, mounting of a chip on the interposer, and manufacturing of a package substrate, and
the navigator/manager navigates optimized information.

8. An integration device that acquires, from a wafer process unit that manages a wafer process of manufacturing a wafer, wafer process information measured in the wafer process, acquires packaging process information measured in a packaging process of manufacturing a package from the wafer from a package unit that manages the packaging process for the wafer manufactured by the wafer process unit, and provides design assistance information obtained on a basis of the wafer process information and the packaging process information to a design unit that designs the wafer process and the packaging process.
